(19) Europäisches Patentamt

European Patent Office

Office européen des brevets

(11) Veröffentlichungsnummer: **0 174 479**
**B1**

(12) **EUROPÄISCHE PATENTSCHRIFT**

(45) Veröffentlichungstag der Patentschrift: **16.05.90**

(51) Int. Cl.⁵: **C 08 F 8/28**

(21) Anmeldenummer: **85109568.7**

(22) Anmeldetag: **30.07.85**

(54) Polyvinylbutyral mit reduzierter Klebrigkeit und verbesserter Reissfestigkeit.

(30) Priorität: **10.08.84 DE 3429440**

(43) Veröffentlichungstag der Anmeldung:
**19.03.86 Patentblatt 86/12**

(45) Bekanntmachung des Hinweises auf die
Patenterteilung:
**16.05.90 Patentblatt 90/20**

(84) Benannte Vertragsstaaten:
**DE FR GB IT SE**

(56) Entgegenhaltungen:
**EP-A-0 000 699     DE-A-1 545 141**
**EP-A-0 088 013     FR-A-1 220 859**

**CHEMICAL ABSTRACTS, Band 91, Nr. 14,**
**Oktober 1979, Seite 30, Nr. 108645g, Columbus,**
**Ohio, US; & JP-A-79 52 195**
**Ullmans Enzyklopädie der Technischen Chemie,**
**4. Auflage, Band 19, Seite 380 (1980s**

**Die Akte enthält technische Angaben, die nach**
**dem Eingang der Anmeldung eingereicht**
**wurden und die nicht in dieser Patentschrift**
**enthalten sind.**

(73) Patentinhaber: **HOECHST**
**AKTIENGESELLSCHAFT**
**Postfach 80 03 20**
**D-6230 Frankfurt am Main 80 (DE)**

(72) Erfinder: **Hermann, Hans Dieter, Dr.**
**Am Dachsbau 7**
**D-6232 Bad Soden am Taunus (DE)**
Erfinder: **Hutten, Ulrich Martin, Dr.**
**Philipp-Kremer-Strasse 35**
**D-6233 Kelkheim (Taunus) (DE)**
Erfinder: **Fabian, Klaus**
**Drosselweg 11**
**D-6239 Kriftel (DE)**

Courier Press, Leamington Spa, England.

# EP 0 174 479 B1

**Beschreibung**

Die Erfindung betrifft Polyvinylbutyral mit reduzierter Klebrigkeit und verbesserter Reißfestigkeit, Verfahren zu seiner Herstellung und seine Verwendung zur Herstellung von weichmacherhaltigen thermoplastischen Formmassen, insbesondere von hochfesten Folien, die sich hervorragend als verbindende Zwischenschicht bei der Herstellung von Verbundglas eignen.

Es ist bekannt, daß man Polyvinylbutyral unter Weichmacherzusatz zu Folien verarbeiten kann, welche als Zwischenschicht in Verbundglas verwendet werden können. Eine der Methoden, dafür geeignetes Polyvinylbutyral herzustellen, besteht z.B. in der Umsetzung einer wässrigen Polyvinylalkohollösung mit n-Butyraldehyd in Gegenwart einer starken Säure.

In der EP—PS 0000699 ist ein Verfahren beschrieben, bei dem sich an die übliche Herstellungsmethode von Polyvinylbutyral eine Nachbehandlungsphase bei 50 bis 70°C in Gegenwart einer emulgierend wirkenden organischen Sulfonsäure anschließt. Aus einem solchermaßen nachbehandelten Polyvinylbutyral können unter Zusatz eines Weichmachers Folien hergestellt werden, die eine höhere Festigkeit, eine höhere Viskosität und eine verringerte Klebrigkeit aufweisen.

Es hat in der Folgezeit nicht an Versuchen gefehlt, die vorteilhaften Eigenschaften dieser in der vorbeschriebenen Weise nachbehandelten Polyvinylbutyralpolymerisate auf andere Weise zu erreichen. Dabei war einer der Gründe für die Suche nach einem verbesserten Verfahren die zwar technisch beherrschbare, jedoch korrosive Wirkung durch die Sulfonsäurekomponente.

So wurde z.B. vorgeschlagen, die emulgierend wirkende organische Sulfonsäure bzw. deren Salze durch wasserlösliche Salze der Perchlorsäure, Salzsäure, Bromwasserstoffsäure, Salpetersäure oder Thiocyansäure zu ersetzen. Diese Salze sind aber wesentlich weniger wirksam als die genannten organischen Sulfonate. Sie müssen daher in erheblich höherer Konzentration eingesetzt werden, was zu Schwierigkeiten bei der Aufarbeitung der Polymerisate führt, die Korrosionsprobleme bei deren Herstellung noch verstärkt und zudem weniger wirtschaftlich ist.

Alle Verfahren haben miteinander gemeinsam, daß die Nachbehandlung zu einer Verstärkung der zwischenmolekularen Kräfte zwischen den Polymerisatmolekülen führt.

Die Zunahme der Wasserstoffbrückenbindungen kann beispielsweise an einer Verbreiterung der OH-Bande im Infrarotspektrum erkannt werden.

Aus den aus dem Stand der Technik bekannt gewordenen Nachteilen bei der Herstellung verbesserter Polyvinylbutyrale ergibt sich, daß unvermindert ein erheblicher Bedarf besteht, eine Erhöhung der zwischenmolekularen Kräfte in Polyvinylbutyral durch einfachere Methoden zu erreichen.

Es wurde nun überraschenderweise gefunden, daß man unter Überwindung der bekannten Schwierigkeiten und Nachteile Polyvinylbutyral mit erheblich verbesserten Eigenschaften dadurch erhalten kann, daß man in wäßriger Phase assoziationsfähigen Polyvinylalkohol in assoziiertem Zustand acetalisiert.

Gegenstand der Erfindung ist daher ein Verfahren zur Herstellung von Polyvinylbutyral mit reduzierter Klebrigkeit und verbesserter Reißfestigkeit durch Acetalisierung von Polyvinylalkohol mit n-Butyraldehyd in wäßriger Phase in Gegenwart eines sauren Katalysators, dadurch gekennzeichnet, daß man assoziationsfähigen Polyvinylalkohol, der weniger als 1 Gew.-% Vinylacetateinheiten enthält und in wäßriger, Fließfähiger Lösung vorliegt, in assoziiertem Zustand acetalisiert.

Erfindungsgemäß können beliebige Polyvinylalkohole, die weniger als 1 Gew.-% Vinylacetateinheiten (VAC) enthalten, als Ausgangskomponenten verwendet werden, die in wäßriger Lösung Assoziate bilden können. Eine bevorzugte Ausführungsform der Erfindung besteht darin, daß man die Assoziationsfähigkeit von Polyvinylalkohol durch Verminderung seines Gehalts an Acetylgruppen entsprechend erhöhen kann.

Das erfindungsgemäße Herstellungsverfahren zeichnet sich gegenüber bekannten Polyvinylbutyral-Herstellungsverfahren u.a. dadurch aus, daß es unter milderen Reaktionsbedingungen durchgeführt werden kann, wie z.B. kürzeren Reaktionszeiten, niedrigeren Temperaturen und/oder niedrigeren Konzentrationen an emulgierend wirkender organischer Sulfonsäure, oder auch völlige Abwesenheit solcher Sulfonsäuren oder Zusätze an Salzen. Gegenüber Polyvinylbutyral, das aus nicht assoziiertem Polyvinylalkohol hergestellt wurde, besitzt erfindungsgemäß hergestelltes Polyvinylbutyral höhere zwischenmolekulare Kräfte. Weichgemachte Folien aus dem erfindungsgemäß hergestellten Polymerisat fließen bei Temperaturen unter 100°C weniger gut, sind fester und weniger klebrig als vergleichsweise aus nicht assoziiertem Polyvinylalkohol hergestellte weichgemachte Polyvinylbutyrale.

Überraschend ist ferner die ausgezeichnete optische Klarheit von weichgemachten erfindungsgemäß hergestellten Polyvinylbutyralfolien. Demgegenüber wird in der Literatur darauf hingewiesen, daß der Herstellung von Polyvinylbutyral in wäßriger Phase eine Assoziation des Polyvinylalkohols, die beispielsweise bei zu niederen Acetalisierungstemperaturen eintreten kann, vermieden werden muß, da sich das resultierende Polyvinylbutyral sonst nicht mehr klar in üblichen Lösungsmitteln, zu denen auch Weichmacher gezählt werden können, löst (vgl. Piastro u.a. Soviet Plastics 1970, Heft 2, Seite 7). Im Gegensatz zu dieser literaturbekannten Feststellung resultieren bei der Verarbeitung von erfindungsgemäß hergestellten Polyvinylbutyralen mit den üblichen Weichmachern klare Folien.

Bei der erfindungsgemäßen Herstellung von Polyvinylbutyral ist es wichtig, daß der umzusetzende Polyvinylalkohol in wäßriger Lösung in assoziierter Form vorliegt, bevor die Reaktion mit n-Butyraldehyd einsetzt. Wie schon erwähnt, können beliebige Polyvinylalkohole, die weniger als 1 Gew.-% VAC enthalten, als Ausgangskomponenten verwendet werden, die in wäßriger Lösung Assoziate bilden können. Eine

2

# EP 0 174 479 B1

weitere Bedingung besteht darin, daß die wäßrigen Lösungen des assoziierten Polyvinylalkohols unter Acetalisierungsbedingungen noch fließfähig sind. Ob ein erfindungsgemäß einzusetzendes Assoziat vorliegt, läßt sich leicht daran erkennen, daß die wäßrige Polyvinylalkohollösung nach Erwärmen auf eine Temperatur von 90 bis 100°C und Abkühlen auf Zimmertemperatur beim anschließenden Stehen eine Viskositätsanstieg zeigt.

Bei Polyvinylalkoholen mit Gehalten von weniger als 1 Gew.-%, vorzugsweise weniger als 0,5 Gew.-%, an Vinylacetateinheiten kann eine Assoziation — erkennbar am Viskositätsanstieg der Lösung beim Stehenlassen bei niedriger Temperatur — relativ einfach erreicht werden, indem man z.B. die Lösung vor der Acetalisierung bis zu mehreren Tagen bei niedriger Temperatur lagert. Durch Abkühlen auf tiefe Temperaturen bis zu −5°C wird die Assoziation beschleunigt. Die Assoziation kann ausgehend von einem handelsüblichen Polyvinylalkohol, der mehr als 1 Gew.-% und vorzugsweise weniger als 5 Gew.-% an Vinylacetateinheiten enthält und der bei Zimmertemperatur in wäßriger Lösung nicht oder nur wenig assoziiert, erreicht werden nach vollständiger oder teilweiser Verseifung seiner noch vorhandenen Acetylgruppen bis zu einem von <1 Gew.-%. Der resultierende verseifte Polyvinylalkohol soll dabei vorzugsweise weniger als 0,5 Gew.-% restliche Vinylacetateinheiten enthalten. Die Verseifung läßt sich leicht durch Zugabe stöchiometrischer Mengen an Alkali, beispielsweise wäßrige Natronlauge oder Kalilauge, zur wäßrigen Lösung des Polyvinylalkohols, vorzugsweise unter Rühren bei erhöhten Temperaturen zwischen 30 und 100°C, vorzugsweise 50 bis 95°C, erreichen (vgl. z.B. DE—OS 2039467). Je nach dem endgültigen Restacetylgehalt kann die Assoziation des Polyvinylalkohols in kurzer oder auch sehr kurzer Zeit erfolgen. Bei praktisch 100%-ig verseiftem Polyvinylalkohol kann eine Assoziation bei niedriger Temperatur z.B. nach 5 bis 10 Min. erfolgt sein. Ein Lagern der Lösung länger als 24 Stunden ist meist nicht erforderlich. Die Temperatur, bei der die Assoziation eintritt, liegt vorzugsweise unterhalb von 40°C, insbesondere zwischen 15 und 20°C. Die Assoziationsdauer beträgt vorzugsweise mindestens 10 Minuten und kann bis zu 24 Stunden betragen.

Der assoziierte Polyvinylalkohol wird anschließend in wäßriger Phase nach bekannten Methoden mit n-Butyraldehyd umgesetzt.

Ein weiterer Gegenstand der Erfindung ist daher ein Verfahren zur Herstellung von Polyvinylbutyral mit reduzierter Klebrigkeit und verbesserter Reißfestigkeit durch Acetalisierung von Polyvinylalkohol mit n-Butyraldehyd in wäßriger Phase in Gegenwart eines sauren Katalysators, dadurch gekennzeichnet, daß man Polyvinylalkohol mit mehr als 1 Gew.-%, vorzugsweise 1 bis 5 Gew.-%, Vinylacetateinheiten in wäßriger Lösung unter Alkalizusatz bis zu einem Gehalt von weniger als 1 Gew.-%, vorzugsweise weniger als 0,5 Gew.-%, Vinylacetateinheiten verseift und den verseiften Polyvinylalkohol in der wäßrigen Lösung in assoziiertem Zustand acetalisiert.

Wie bereits erwähnt, kann die Herstellung erfindungsgemäßer Polyvinylbutyralpolymerisate in wäßriger Phase nach bekannten Methoden erfolgen. Die Umsetzung mit n-Butyraldehyd wird in Gegenwart starker, vorzugsweise anorganischer Säuren, wie z.B. Salzsäure, Schwefelsäure oder Salpetersäure in einer Konzentration von 0,1 bis 5 Gew.-%, bezogen auf die wäßrige Phase, durchgeführt. Bevorzugt ist eine Methode, bei der die Acetalisierung unterhalb von 20°C, vorzugsweise bei 0 bis 15°C, begonnen und die Temperatur im Verlauf der Reaktion auf über 40°C gesteigert wird.

Gegebenenfalls vorteilhafterweise können zusätzlich zur Mineralsäure beliebige Emulgatoren anwesend sein, insbesondere eine emulgierend wirkende organische Sulfonsäure oder deren Salz. Ferner können auch andere Salze, wie Alkalichloride, -bromide, -nitrate, -perchlorate oder -acetate zugesetzt werden. Die Anwesenheit diesre Zusätze kann insbesondere dann vorteilhaft sein, wenn sich an die eigentliche Herstellung des Polymerisats eine Nachbehandlungsphase von 0,5 bis 10 Stunden, vorzugsweise 1 bis 7 Stunden, bei 50°C bis 70°C anschließt. Die Konzentration der Zusätze kann, entsprechend ihrer unterschiedlichen Wirksamkeit, vorzugsweise zwischen 0,01 und 20 Gew.-%, bezogen auf Polyvinylbutyral, liegen. Besonders vorteilhaft ist die Verwendung bis zu 1 Gew.-%, insbesondere von 0,01 bis 0,5 Gew.-%, vorzugswiese von 0,05 bis 0,4 Gew.-%, einer emulgierend wirkenden organischen Sulfonsäure mit z.B. 8 bis 30 C-Atomen oder ihrer Salze.

Für die Herstellung von Polyvinylbutyral sind prinzipiell Polyvinylalkohole mit niederen bis hohen Molekulargewichten geeignet. Für die Herstellung von Verbundfolien werden jedoch Polyvinylbutyrale benötigt, die eine Viskosität (gemessen nach DIN 53015 an einer 6 gew.-%igen Lösung in Ethanol bei 23°C) von 10 bis 200 mPa·s, vorzugsweise von 50 bis 100 mPa·s, aufweisen. Die Einstellung dieser Viskosität erfolgt durch Auswahl ensprechender Polyvinylalkohole.

Das resultierende Polyvinylbutyral kann einen Restgehalt an Vinylalkoholeinheiten von 14 bis 28 Gew.-%, vorzugsweise 15 bis 24 Gew.-%, haben. Die Einstellung dieses Vinylalkoholgehalts kann durch Variation der bei der Acetalisierung eingesetzten Butyraldehydmenge erfolgen.

Nach Abtrennung des Polyvinylbutyrals aus der wäßrigen Phase wird das Polymerisat wie üblich neutral gewaschen, vorzugsweise nach bekannten Methoden mit einer geringen Menge an Alkali versetzt und getrocknet. Auch die Verarbeitung des Polyvinylbutyrals zu weichmacherhaltigen Verbundfolien erfolgt nach bekannten Methoden zusammen mit einem Weichmacher.

Die Menge des bei der Verbundfolienherstellung zuzusetzenden Weichmachers beträgt im allgemeinen 20 bis 50 Gewichtsteile auf 100 Gewichtsteile Polyvinylbutyral. Als Weichmacher dienen die üblicherweise verwendeten Verbindungen, z.B. Ester von mehrwertigen Alkoholen oder von mehrwertigen Säuren. Beispielsweise sind Ester des Triethylenglykols mit aliphatischen Carbonsäuren mit 6 bis 10

3

EP 0 174 479 B1

Kohelnstoffatomen, wie insbesondere 2-Äthylbuttersäure, Glycerinmonooleat, Dibutylsebacat, Di(β-butoxymethyl)-adipat, Dioctylphthalat und Tricresylphosphat, geeignet. Diese Weichmacher können einzeln oder in Gemischen verwendet werden.

Ferner können Substanzen zugesetzt werden, die die Mischung gegen Abbau stabilisieren, z.B. geringe Mengen an Alkali oder an alkalisch reagierenden Salzen, ferner Oxidationsstabilisatoren wie die in 2-, 4-, und/oder 6-Stellung substituierten Phenole, Biosphenole oder Terpenphenole.

Schließlich können die Mischungen noch Zusätze enthalten, die die Haftung der Folien aneinander oder an Glas beeinflussen, z.B. Salze von Carbonsäuren, Fluoride, Lecithin oder Alkylenharnstoffe.

Sowohl die genannten Stabilisatoren als auch die Zusätze zum Beeinflussen der Haftung können üblicherweise in Mengen von 0,001 bis 1 Gewichtsprozent, bezogen auf die Gesamtmischung, zugesetzt werden. Polyvinylbutyral, Weichmacher und gegebenenfalls Zusätze können in bekannter Weise durch Zusammenrühren und gegebenenfalls Stehenlassen der Mischung oder durch Verkneten oder Verwalzen bei erhöhter Temperatur oder auch unmittelbar bei der Verarbeitung auf dem Kalander oder im Extruder gemischt werden.

Die Herstellung von Glasverbunden aus Verbundfolien, die erfindungsgemäß hergestelltes Polyvinylbutyral enthalten, kann nach den üblichen Methoden, beispielsweise durch Verpressen zwischen zwei Glasscheiben bei 120 bis 160°C und 5 bis 20 bar erfolgen.

Erfindungsgemäß aus assoziiertem Polyvinylalkohol hergestelltes Polyvinylbutyral ist an sich neu. Seine überraschend vorteilhaften Eigenschaften, wie z.B. seine reduzierte Klebrigkeit, seine verbesserte Reißfestigkeit und seine verminderte Fließfähigkeit, können u.a. möglicherweise damit erklärt werden, daß in den assoziationsfähigen Polyvinylalkoholmolekülen z.B. Blöcke von syndiotaktischen Polyvinylalkoholsequenzen vorhanden sind, die mit gleichartigen Sequenzen benachbarter Polyvinylalkoholmoleküle unter Bildung fester Wasserstoffbrückenbindungen assoziieren können. Während der Acetalisierungsreaktion des Polyvinylalkohols im assoziierten Zustand in wäßriger Phase bleiben überraschenderweise die Wasserstoffbrückenbindungen zwischen den genannten Polyvinylalkoholsequenzen offensichtlich, und zwar gegebenenfalls bis zu Temperaturen von maximal 50 bis 70°C, erhalten und bewirken in dem resultierenden Polyvinylbutyral eine dauerhafte partielle physikalische Vernetzung.

Weitere Gegenstände der Erfindung sind die Verwendung von weichmacherhaltigem erfindungsgemäßem Polyvinylbutyral in Form von thermoplastischen Folien zur Herstellung von Glasverbunden, sowie Glasverbunde, welche die letztere Folie als Verbundschicht enthalten.

Die Erfindung wird durch die nachfolgenden Beispiele näher erläutert.

## Beispiel 1

### a) (Vergleich)

1000 Gewichtsteile einer 10 gew.-%igen wäßrigen Polyvinylalkohollösung (Polymerisationsgrad $P_n$ ca. 1400, Vinylacetateinheiten 2,2 Gew.-%, bezogen auf das Polymerisat), die zuvor 1 Stunde auf 15°C gehalten worden war, werden mit 65 Gewichtsteilen konzentrierter Salzsäure vermischt und das Gemisch bei 15°C mit n-Butyraldehyd umgesetzt. Dazu werden 58 Gewichtsteile n-Butyraldehyd umgesetzt. Dazu werden 58 Gewichtsteile n-Butyraldehyd kontinuierlich im Verlauf von 30 Minuten zugegeben. Das entstehende Polyvinylbutyral fällt dabei feinteilig aus. 30 Minuten nach Beendigung der Aldehydzugabe wird das Reaktionsgemisch mit einer Geschwindigkeit von 20°C/Stunde auf 58°C erwärmt. Bei Erreichen dieser Temperatur werden 0,15 Gewichtsteile $C_{15}$-Alkansulfonsäure zugegeben und das Gemisch 5 Stunden bei 58°C gerührt. Anschließend wird abgekühlt, das Polyvinylbutyral abfiltriert, mit Wasser neutral gewaschen, mit einer Mischung aus 750 Gewichtsteilen Wasser und 2,5 Gewichtsteilen 10 gew.-%-iger Natronlauge 1 Stunde bei 60°C gerührt, filtriert und bei 40°C im Vakuum getrocknet. Das pulverförmige Polymerisat wird mit 29 Gew.-% (bezogen auf die Mischung) Triethylenglykol-bis-2-ethylbuttersäureester als Weichmacher und 0,01 Gew.-% Kaliumformiat (10 gew.-%ig in Wasser) vermischt und zu einer 0,76 mm starken Folie extrudiert. Von der bei 23°C und 50% rel. Luftfeuchte klimatisierten Folie werden mit 3 mm starkem Floatglas 30 × 30 cm große Glasverbunde in einem Autoklaven bei 12 bar und 140°C hergestellt.

### b) (erfindungsgemäß)

Die bei Versuch a) eingesetzte Polyvinylalkohollösung wird vor der Acetalisierung auf 90°C erhitzt, unter Rühren mit 7,5 Gewichtsteilen 10 gew.-%iger Natronlauge versetzt und 30 Minuten bei dieser Temperatur gehalten. Der Gehalt an Vinylacetateinheiten im Polyvinylalkohol sinkt durch diese Maßnahme auf 0,6 Gew.-%. Nach Abkühlen der Lösung auf 15°C werden wir unter a) beschrieben der Polyvinylalkohol mit mit Butyraldehyd umgesetzt, das Reaktionsgemisch aufgearbeitet, das Polymerisat zu einer Folie und Folie zu einem Glasverbund verarbeitet.

Die nach Beispiel 1a) und b) erhaltenen Polyvinylbutyral-Polymerisate und die daraus hergestellten weichmacherhaltigen Folien bzw. glasverbunde haben die in der Tabelle 1 zusammengefaßt wieder-gegebenen Eigenschaften.

4

## EP 0 174 479 B1

TABELLE 1

| Beisp. 1 | Polymerisat | | Folie | | Glasverbund |
|---|---|---|---|---|---|
| | Viskosität[1] (mPa·s) | Gehalt an Vinylalkohol-heiten (Gew.-%) | Schmelz-index $i_{10}$[2] (g/10 Min) | Klebrig-keit[3] (sec) | Mittlere Bruchhöhe[4] (m) |
| a) Vergleich) | 81 | 20,4 | 2,5 | 1800 | 6,3 |
| b) (erfindungsgemäß) | 125 | 20,6 | 1,9 | 1400 | 7,1 |

[1] Gemessen bei 23°C an einer bei Zimmertemperatur hergestellten 5 gew.-%igen ethanolischen Lösung nach DIN 53015.

[2] Bestimmung nach DIN 53735 bei 150°C unter 10 kg Last.

[3] Bestimmung nach EP—PS 0000699, Seite 5.

[4] Falltest nach DIN 52306 mit einer 2,26 kg schweren Stahlkugel. Bei der mittleren Bruchhöhe werden 50% der geprüften Scheiben durchschlagen.

Das Beispiel macht deutlich, daß eine Verminderung des Acetylgruppengehaltes im Polyvinylalkohol die Assoziation des Polymerisats fördert, und daß sich diese Assoziation auch nach der Acetalisierung durch eine höhere Lösungs- und Schmelzviskosität des Polyvinylbutyrals bemerkbar macht. Darüber hinaus resultiert bei dem erfindungsgemäß hergestellten Polymerisat des Beispiels 1b) eine Verminderung der Klebrigkeit.

### Beispiel 2

In ähnlicher Weise wie in Beispiel 1 beschrieben wird ein Polyvinylalkohol mit dem Polymerisations-grad $P_n$ von ca. 1300 und einem Gehalt an Vinylacetateinheiten von 1,8 Gew.-% acetalisiert. Dabei wird der Polyvinylalkohol einmal im Originalzustand mit n-Butyraldehyd umgesetzt (Beispiel 2a, Vergleich) und einmal nach vollständiger Verseifung der Acetylgruppen (Beispiel 2b,. erfindungsgemäß). Zu dieser Verseifung werden 1000 Gewichtsteile 10 gew.-%ige Polyvinylalkohollösung mit 10 Gewichtsteilen 10 gew.-%iger Natronlauge 30 Minuten bei 90°C gerührt. Nach Abkühlen auf Zimmertemperatur wird die verseifte Polyvinylalkohollösung 24 Stunden stehen gelassen und dann acetalisiert. Die Acetalisierung wird wie in Beispiel 1 beschrieben durchgeführt, jedoch mit folgenden Änderungen: Abwesenheit von Alkansulfonsäure, Menge an n-Butyraldehyd = 57 Gewichtsteile, Erwärmen mit einer Geschwindigkeit von 20°C/ Stunde auf 60°C und 1 Stunde halten bei dieser Temperatur. Die Aufarbeitung der Polymerisate und die Herstellung von Folien erfolgt wie in Beispiel 1 beschrieben.

Die Polyvinylbutyral-Polymerisate bzw. die daraus hergestellten weichmacherhaltigen Folien haben die in der Tabelle 2 zusammengefaßt wiedergegebenen Eigenschaften.

TABELLE 2

| Beisp. 2 | Polymerisat | Folie | | |
|---|---|---|---|---|
| | Gehalt an Vinylalkohol-einheiten (Gew.-%) | Schmelzindex[1)2] $i_{10}$ 150°C (g/10 Min.) | $i_{20}$ 80°C (mg/Std) | Reißfestigkeit (N/mm²)[3] |
| a) (Vergleich) | 21,6 | 6,9 | 210 | 24,0 |
| (b) (erfindungsgemäß) | 21,8 | 3,4 | 50 | 26,5 |

[1] Bestimmung nach DIN 53735 bei 150°C unter 10 kg Last.

[2] Bestimmung des Ausstoßes in mg/Stunde unter 21,6 kg Last bei 80°C. Apparatur wie bei der $i_{10}$-Messung.

[3] Bestimmung nach DIN 53455 nach Klimatisierung bei 23°C und 50% relativer Luftfeuchte, Zuggeschwindigkeit 20 cm/Min., Einspannlänge 50 mm, Breite der Meßstreifen 15 mm.

### Beispiel 3

In gleicher Weise wie in Beispiel 2 beschrieben werden bei einem Polyvinylalkohol mit einem Polymerisationsgrad $P_n$ von ca. 1400 der Gehalt an Vinylacetateinheiten durch Nachverseifung von 1,6 auf 0,4 Gew.-% erniedrigt, der nachverseifte Polyvinylalkohol acetalisiert und dabei ein Polyvinylbutyral mit

5

einem Gehalt an Vinylalkoholeinheiten von 19,8 Gew.-% erhalten. Eine bei Zimmertemperatur hergestellte 5 gew.-%ige Lösung dieses Polyvinylbutyralpolymerisats in Ethanol besitzt bei 23°C eine Viskosität von 140 mPa·s.

Folien aus diesem Polyvinylbutyral mit einem Gehalt von 29 Gew.-% Triethylenglykol-bis-heptansäureester als Weichmacher besitzen eine Reißfestigkeit von 27,5 N/mm² und einen Schmelzindex $i_{10}$ bei 150°C von 2,8 g/10 Min.

Ein parallel dazu aus dem unbehandelten, d.h. nicht nachverseiften, Ausgangs-Polyvinylalkohol hergestelltes und vergleichsweise verarbeitetes Polyvinylbutyral ergibt folgende Werte:

Viskosität: 80 mPa·s,
Reißfestigkeit: 26 N/mm²,
Schmelzindex $i_{10}$ bei 150°C: 4,4 g/10 Min.

## Beispiel 4

a) *(erfindungsgemäß)*

1000 Gewichtsteile einer 10 gew.-%igen Lösung von Polyvinylalkohol mit einem Polymerisationsgrad $P_n$ von ca. 1300 und einem Gehalt an Vinylacetateinheiten von 1,8 Gew.-% werden auf 90°C erhitzt und nach Zugabe von 9,3 Gewichtsteilen 10 gew.-%iger Natronlauge 30 Minuten bei 90°C gerührt. Anschließend wird die Lösung auf 16°C gekühlt, wobei die Abkühlungszeit zwischen 40°C und 16°C 20 Minuten beträgt, und mit 65 Gewichtsteilen konzentrierter Salzsäure versetzt. Zu dieser Mischung werden unter Rühren im Verlauf von 20 Minuten 57,6 Gewichtsteile n-Butyraldehyd kontinuierlich zugegeben. Eine Stunde nach Beendigung der Aldehydzugabe wird der Ansatz unter Rühren in einer Stunde auf 50°C erwärmt und drei Stunden bei dieser Temperatur gehalten. Nach der in Beispiel 1 beschriebenen Aufarbeitung wird ein pulverförmiges Polyvinylbutyral erhalten mit einem Gehalt von 21,6 Gew.-% Vinylalkoholeinheiten und 0,1 Gew.-% Vinylacetateinheiten. Das Polymerisat wird mit 29 Gew.-% Triethylenglykol-bis-heptansäureester als Weichmacher und 0,015 Gew.-% Kaliumformiat (10 gew.-%ig in Waser), bezogen auf das Gemisch, vermischt und zu einer 0,76 mm starken Folie extrudiert. Aus der Folie werden wie in Beispiel 1 beschrieben Glasverbunde hergestellt.

b) *(Vergleich)*

Beispiel 4a) wird wiederholt, jedoch mit dem Unterschied, daß der als Ausgangsmaterial dienende Polyvinylalkohol ohne Nachverseifung acetalisiert wird. Außerdem werden, im Gegensatz zum obigen Beispiel 4a), dem Acetalisierungsgemisch 0,15 Gewichtsteile Natriumdodecylbenzolsulfonat zugesetzt. Im übrigen unterschieden sich die Acetalisierungsbedingungen nicht von dem Beispiel 4a). Es wird ein Polyvinylbutyral mit einem Gehalt an Vinylalkoholeinheiten von 21,3 Gew.-% erhalten. Aus diesem Polyvinylbutyral werden Folien und Glasverbunde hergestellt, wie im Beispiel 4a) beschrieben.

Die nach Beispiel 4 a) und b) erhaltenen Polyvinylbutyralpolymerisate und die daraus hergestellten weichmacherhaltigen Folien bzw. Glasverbunde haben die in Tabelle 3 zusammengefaßt wiedergegebenen Eigenschaften.

TABELLE 3

| Beisp. 4 | Polymerisat | Folie | | | | | | Glasverbund |
|---|---|---|---|---|---|---|---|---|
| | | Schmelzindex | | Reißfestig-keit $(N/mm^2)$ | Festigkeit/ 100% Dehng. $(N/mm^2)$ | Klebrig-keit (sec) | | Mittlere Bruchhöhe (m) |
| | Viskosität[1] $(mPa·s)$ | $i_{10}$ $150°C$[2] (g/10 Min.) | $i_{20}$ $80°C$[3] (mg/Std) | | | | | |
| a) (erfin-dungsgemäß) | 90 | 4,0 | 80 | 25 | 2,6 | 1850 | | 7,1 |
| b) (Vergleich) | 72 | 6,1 | 360 | 24 | 2,1 | 3100 | | 6,5 |

[1] Gemessen bei 23°C an einer bei Zimmertemperatur hergestellten 5 gew.-%igen ethanolischen Lösung nach DIN 53015.
[2] Bestimmung nach DIN 53735 bei 150°C unter 10 kg Last.
[3] Bestimmung des Ausstoßes in mg/Stunde unter 21,6 kg Last bei 80°C. Apparatur wie bei der $i_{10}$-Messung.

Die nach Beispiel 4 a) und b) hergestellten Glasverbunde sind völlig klar und transparent.

EP 0 174 479 B1

# EP 0 174 479 B1

## Patentansprüche

1. Verfahren zur Herstellung von Polyvinylbutyral mit reduzierter Klebrigkeit und verbesserter Reißfestigkeit durch Acetalisierung von Polyvinylalkohol mit n-Butyraldehyd in wäßriger Phase in Gegenwart eines sauren Katalysators, dadurch gekennzeichnet, daß man assoziationsfähigen Polyvinylalkohol, der weniger als 1 Gew.-%, Vinylacetateinheiten enthält und in wäßriger, fließfähiger Lösung vorliegt in assoziiertem Zustand acetalisiert.

2. Verfahren nach Anspruch 1, dadurch gekennzeichnet, daß man Polyvinylalkohol mit mehr als 1 Gew.-% Vinylacetateinheiten in wäßriger Lösung unter Alkalizusatz bis zu einem Gehalt von weniger als 1 Gew.-% Vinylacetateinheiten verseift und den verseiften Polyvinylalkohol in der wäßrigen Lösung in assoziiertem Zustand acetalisiert.

3. Verfahren nach Ansprüchen 1 oder 2, dadurch gekennzeichnet, daß der assoziationsfähige Polyvinylalkohol vor der Acetalisierung in der erforderlichen assoziierten Zustand gebracht wird, indem man seine wäßrige Lösung mindestens 10 Minuten auf einer niederigen Temperatur hält.

4. Verfahren nach einem der Ansprüche 1 bis 3, dadurch gekennzeichnet, daß man die Acetalisierung bei Temperaturen unterhalb von 20°C beginnt und die Temperatur im Verlauf der Reaktion auf über 40°C steigert.

5. Verfahren nach einem der Ansprüche 1 bis 4, dadurch gekennzeichnet, daß das resultierende Polyvinylbutyral unter Acetalisierungsbedingungen einer Nachbehandlung bei 50 bis 70°C in Gegenwart von bis zu 1 Gew.-% einer emulgierend wirkenden organischen Sulfonsäure mit 8 bis 30 C-Atomen oder ihrer Salze unterzogen wird.

6. Verwendung weichmacherhaltiger Polyvinylbutyralfolien, enthaltend Polyvinylbutyral hergestellt nach einem der Ansprüche 1 bis 5, zur Herstellung von Glasverbunden.

7. Glasverbunde, enthaltend weichmacherhaltige Polyvinylbutyralfolie nach Anspruch 6 als Verbundschicht.

## Revendications

1. Procéde pour préparer un poly-(vinylbutyral) ayant une adhésivité réduite et une résistance à la traction améliorée, par acétalisation d'un poly-(alcool vinylique) avec du n-butyraldéhyde, en phase aqueuse et en présence d'un catalyseur acide, procédé caractérisé en ce qu'on acétalise à l'état associé un poly-(alcool vinylique) capable d'association qui contient moins de 1% en poids de motifs d'acétate de vinyle et qui se trouve en solution aqueuse fluide.

2. Procédé selon la revendication 1 caractérisé en ce qu'on saponifie un poly-(alcool vinylique) renfermant plus de 1% en poids de motifs d'acétate de vinyle, en solution aqueuse, en ajoutant un alcali, saponification qui est poursuivie jusqu'à ce qu'on atteigne une teneur en motifs d'acétate de vinyle inférieure à 1% en poids, et on acétalise dans la solution aqueuse, à l'état associé, le poly-(alcool vinylique) saponifié.

3. Procédé selon l'une des revendications 1 et 2, caractérisé en ce que, pour amener à l'état associé nécessaire, avant l'acétalisation, le poly-(alcool vinylique) capable d'association, on maintient sa solution aqueuse à une faible température pendant au moins 10 minutes.

4. Procédé selon l'une quelconque des revendications 1 à 3, caractérisé en ce qu'on commence l'acétalisation à des températures inférieures à 20°C et en ce qu'on fait monter la température, au cours de la réaction, jusqu'à plus de 40°C.

5. Procédé selon l'une quelconque des revendications 1 à 4, caractérisé en ce qu'on soumet le poly-(vinylbutyral) formé, dans des conditions d'acétalisation, à un post-traitement à une température de 50 à 70°C en présence d'une quantité d'au plus 1% en poids d'un acide sulfonique organique émulsionnant contenant de 8 à 30 atomes de carbone ou d'un de ses sels.

6. Application de feuilles en poly(vinylbutyral) plastifié contenant un poly-(vinylbutyral) préparé selon l'une quelconque des revendications 1 à 5, pour la fabrication de verres de sécurité feuilletés.

7. Verres de sécurité feuilletés qui contiennent, comme couche de liaison, une feuille en poly(vinylbutyral) plastifié selon la revendication 6.

## Claims

1. A process for the preparation of polyvinyl butyral of reduced tackiness and improved tensile strength by acetalization of polyvinyl alcohol with n-butyraldehyde in aqueuse phase in the presence of an acid catalyst, which comprises acetalizing polyvinyl alcohol, which contains less than 1% by weight of vinyl acetate units, is present in aqueous, flowable solution and is capable of association, in the associated state.

2. The process as claimed in claim 1 wherein polyvinyl alcohol with more than 1% by weight of vinyl acetate units is saponified in aqueous solution with an addition of alkali down to a content of less than 1% by weight of vinyl acetate units an   :he saponified polyvinyl alcohol is acetalized in the aqueous solution in the associated state.

3. The process as claimed in either of claims 1 or 2, wherein the polyvinyl alcohol capable of

8

association is brought, before the acetalization, into the required associated state by keeping its aqueous solution for at least 10 minutes at a low temperature.

4. The process as claimed in any of claims 1 to 3, wherein the acetalization is started at temperatures below 20°C and the temperature is raised to above 40°C in the course of the reaction.

5. The process as claimed in any of claims 1 to 4, wherein the resulting polyvinyl butyral is subjected under acetalization conditions to an aftertreatment at 50 to 70°C in the presence of up to 1% by weight of an organic sulfonic acid having 8 to 30 carbon atoms and having an emulsifying action, or salts thereof.

6. The use of plasticized polyvinyl butyral films, containing polyvinyl butyral prepared as claimed in any of claims 1 to 5, for the manufacture of laminated glass.

7. Laminated glass, containing plasticized polyvinyl butyral film, as claimed in claim 6, as the joining layer.